(19) Europäisches Patentamt
European Patent Office
Office européen des brevets

(11) **EP 3 543 681 A1**

(12) **EUROPÄISCHE PATENTANMELDUNG**

(43) Veröffentlichungstag:
25.09.2019 Patentblatt 2019/39

(51) Int Cl.:
*G01N 21/3563* (2014.01)  *G01N 15/06* (2006.01)
*G01N 21/896* (2006.01)  *G01N 21/94* (2006.01)
*G01N 21/958* (2006.01)  *G01N 21/88* (2006.01)

(21) Anmeldenummer: 18163524.4

(22) Anmeldetag: **23.03.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Saint-Gobain Glass France**
**92400 Courbevoie (FR)**

(72) Erfinder:
• **LETOCART, Philippe**
**4730 Raeren (BE)**

• **CREUTIN, Florent**
**52064 Aachen (DE)**
• **GUIN, Marie**
**52070 Aachen (DE)**
• **MOTEMANI, Yahya**
**52070 Aachen (DE)**
• **SCHULZ, Daniel Erich**
**58099 Hagen (DE)**

(74) Vertreter: **Schönen, Iris**
**Saint-Gobain Sekurit Deutschland GmbH & Co. KG**
**Herzogenrath R&D Centre - Patentabteilung**
**Glasstraße 1**
**52134 Herzogenrath (DE)**

(54) **DETEKTIONSSYSTEM ZUR DETEKTION VON SPEZIFISCHEN KLEINEN ORGANISCHEN TEILCHEN AUF UNBESCHICHTETEM ODER BESCHICHTETEM GLAS MIT HOHEM DURCHSATZ**

(57)    Die Erfindung betrifft eine Vorrichtung und ein Verfahren zur Detektion von organischen Teilchen auf einer unbeschichteten oder beschichteten Glasscheibe (5) mittels Streulicht, wobei die Vorrichtung eine Fixiereinrichtung (1) zur Fixierung der zu untersuchenden Glasscheibe; eine Belichtungsquelle (2) für linienförmiges IR-Licht, die an einer Halteeinrichtung (6) befestigt ist und konfiguriert ist, um eine Seite der fixierten Glasscheibe, direkt oder mittels Umlenkung mit einem Spiegelsystem, mit streifendem Lichteinfall mit einem Glanzwinkel 0 zu belichten; eine Detektionseinheit (3), die so angeordnet ist, dass sie der zu belichtenden Seite der Glasscheibe zugewandt ist, und konfiguriert ist, um IR-Licht zu detektieren, das von organischen Teilchen auf der belichteten Seite der Glasscheibe gestreut wird, um Daten für eine Abbildung und/oder ein Spektrum zu erhalten; und ein Gehäuse (4), in dem sich die Fixiereinrichtung, die Belichtungsquelle für linienförmiges IR-Licht und die Detektionseinheit befinden, wobei das Gehäuse mindestens eine verschließbare Öffnung aufweist und das Innere des Gehäuses im geschlossenen Zustand von externen Lichtquellen abgeschirmt ist, umfasst.

Die erfindungsgemäße Vorrichtung eignet sich für die schnelle Detektion und Identifizierung von spezifischen kleinen organischen Teilchen auf Glas.

Fig. 2

**Beschreibung**

Die Erfindung betrifft eine Vorrichtung zur Detektion von organischen Teilchen auf einer Glasscheibe mittels Streulicht und ein Verfahren zur Detektion von organischen Teilchen auf einer Glasscheibe mit dieser Vorrichtung.

Glasscheiben werden vielfältig eingesetzt, z.B. in der Bau-, Möbel- und Automobilindustrie oder im Medizinbereich. Sie können mit relativ kleinen organischen Teilchen verunreinigt sein, die auf der Oberfläche der Glasscheibe haften. Diese Verunreinigungen können von der Produktion der Glasscheibe, von Verpackungsmaterialien oder der Umgebungsluft stammen. Bei einer Montage der Glasscheibe oder bei einer beabsichtigten Behandlung der Glasscheibe, z.B. durch Beschichten, Erwärmen oder Laminieren, können die organischen Teilchen einen störenden Einfluss ausüben, was zu Fehlern oder Mängeln führen kann. Wie groß der störende Einfluss ist, kann z.B. von der Menge, der Größe, der Lage und der Art der organischen Teilchen abhängen.

Es wäre daher wünschenswert, wenn Informationen zu Verunreinigungen durch organische Teilchen auf einer Glasscheibe vorhanden wären, um den störenden Einfluss für Montage oder Weiterbehandlung abschätzen zu können. Auf diese Weise hätte man z.B. eine Entscheidungsgrundlage, ob die Glasscheibe für die Weiterverarbeitung geeignet ist oder nicht, wodurch Produktionsfehler minimiert werden könnten. Sofern Bedenken gegen eine Weiterverarbeitung bestehen, kommen z.B. eine Reinigung, eine Rückgabe an den Lieferanten oder ein Aussortieren in Betracht. Die Informationen können auch dazu dienen, den Ursprung der Verunreinigung zu identifizieren und gegebenenfalls Abhilfe zu schaffen.

Die Identifizierung solcher organischen Teilchen auf Glasscheiben ist aber nicht ohne weiteres möglich. Die Partikel sind meist sehr klein, so dass sie mit bloßem Auge gar nicht oder nur schwer erkennbar sind. Die Feststellung der Art der organischen Teilchen ist in der Regel ohne aufwendige Analysen gar nicht möglich. Es versteht sich, dass ein derartigen Detektionsverfahren relativ schnell und einfach sein muss, um von wirtschaftlichem Interesse zu sein.

US 2017/0160208 A1 beschreibt ein multispektrales bildgebendes System und ein Verfahren zur Detektion von Fremdmaterialien auf Kompositstrukturen während der Herstellung der Komposite. Bei dem Verfahren wird eine Oberfläche einer Kompositstruktur mit einem Licht im nahen Infrarot bestrahlt und nach der Wechselwirkung mit der Oberfläche wird das IR-Licht in einem Detektor aufgefangen und das erhaltene Spektrum analysiert, um das Vorhandensein von Fremdmaterial und dessen Art festzustellen.

US 6008492 beschreibt ein hyperspektrales bildgebendes Verfahren und eine dafür geeignete Vorrichtung zur Bestimmung der Position und Größe von Materialien von Interesse.

US 6245507 B1 betrifft ein hyperspektrales bildgebendes Verfahren und eine entsprechende Vorrichtung zur Detektion von fluoreszenzmarkierten Nucleotiden.

US 2011/102565 A1 betrifft ein spektrales bildgebendes Verfahren, bei dem Bilder von makroskopischen und mikroskopischen Proben mit Spektralfiltern aufgenommen werden, z.B. zur Detektion von Materialzusammensetzung und Morphologie oder zur Detektion und Identifizierung von biologischen Spezies.

US 2008/144001 A1 beschreibt Systeme und Verfahren für die spektrale Bildgebung, mit denen Eigenschaften von Materialien an verschiedenen Positionen einer Oberfläche oder innerhalb eines Materials bestimmt werden können.

Die Aufgabe der Erfindung ist die Bereitstellung eines Detektionssystems und Detektionsverfahrens für spezifische kleine organische Partikel auf Glas und beschichtetem Glas. Die Detektion soll weitgehend automatisiert, einfach ausführbar und schnell sein, um einen hohen Durchsatz zu ermöglichen. Neben der Information über Vorhandensein und Lage der Partikel soll das Detektionssystem selektiv für den Nachweis bestimmter Arten von organischen Partikeln wie z.B. Polymeren sein. Das System soll nicht jede Art von Defekten erkennen, sondern nur solche, die bestimmten Wellenlängen entsprechen.

Überraschenderweise wurde festgestellt, dass diese Aufgabe gelöst werden konnte, indem eine Kombination von Beleuchtungssystem und Detektionseinheit eingesetzt wird, wobei die zu untersuchende Glasscheibe mit streifendem Lichteinfall belichtet wird, um spezifische Partikelkontaminationen auf Glas aufgrund ihrer charakteristischen spektralen Empfindlichkeit im IR-Bereich zu identifizieren.

Die Aufgabe wird daher erfindungsgemäß durch eine Vorrichtung nach Anspruch 1 und ein Verfahren nach Anspruch 10 gelöst. Bevorzugte Ausführungsformen der Erfindung gehen aus den abhängigen Ansprüchen hervor.

Die Vorrichtung und das Verfahren gemäß der Erfindung ermöglichen die Detektion von spezifischen organischen Partikeln auf Glas oder beschichtetem Glas zuverlässig, in einfacher Weise und mit hohem Durchsatz. Mögliche Anwendungen dieses Systems finden sich z.B. in der Glasindustrie oder in der Medizin.

Dementsprechend betrifft die Erfindung eine Vorrichtung zur Detektion von organischen Teilchen auf einer unbeschichteten oder beschichteten Glasscheibe mittels Streulicht, umfassend:

1) eine Fixiereinrichtung zur Fixierung der zu untersuchenden Glasscheibe;
2) eine Belichtungsquelle für linienförmiges IR-Licht, die an einer Halteeinrichtung befestigt ist und konfiguriert ist, um eine Seite der fixierten Glasscheibe, direkt oder mittels Umlenkung mit einem Spiegelsystem, mit streifendem Lichteinfall mit einem Glanzwinkel θ zu belichten;

3) eine Detektionseinheit, die so angeordnet ist, dass sie der zu belichtenden Seite der Glasscheibe zugewandt ist, und konfiguriert ist, um IR-Licht zu detektieren, das von organischen Teilchen auf der belichteten Seite der Glasscheibe gestreut wird, um Daten für eine Abbildung und/oder ein Spektrum zu erhalten; und

4) ein Gehäuse, in dem sich die Fixiereinrichtung, die Infrarot-Belichtungsquelle und die Detektionseinheit befinden, wobei das Gehäuse mindestens eine verschließbare Öffnung aufweist und das Innere des Gehäuses im geschlossenen Zustand von externen Lichtquellen abgeschirmt ist.

Im Folgenden wird die Erfindung im Einzelnen erläutert. Die nachstehenden Erläuterungen, die sich auf die erfindungsgemäße Vorrichtung beziehen, gelten auch für das erfindungsgemäße Verfahren und umgekehrt.

Die Detektion der organischen Partikel erfolgt im infraroten (IR) Bereich. IR ist die übliche Abkürzung für Infrarot. IR-Licht wird auch als IR-Strahlung bezeichnet. Die Begriffe Strahlung und Licht bzw. bestrahlt und belichtet sind hier synonyme Begriffe. Die Begriffe "Belichten" und "Beleuchten" werden hier ebenfalls synonym verwendet.

Die beiden im Wesentlichen planaren und zueinander parallelen Flächen der zu untersuchenden Glasscheibe werden als Oberflächen bezeichnet.

Die Vorrichtung dient zur Detektion von organischen Teilchen auf einer unbeschichteten oder beschichteten Glasscheibe. Die Detektion kann das Feststellen des Vorhandenseins der organischen Teilchen und/oder deren Lage und/oder die Identifizierung der Art der organischen Teilchen umfassen. Anhand der Intensität der erhaltenen Signale können gegebenenfalls auch Rückschlüsse auf die Größe der Partikel gewonnen werden. Das Prinzip beruht auf der Detektion von Streulicht, das von den organischen Partikeln erzeugt wird, und der Erzeugung von für die jeweiligen Arten der Partikel charakteristischen Spektren.

Die zu untersuchende Glasscheibe kann beschichtet oder unbeschichtet sein. Bei der Beschichtung kann es sich z.B. um eine elektrochrome Beschichtung handeln. Andere denkbare Beschichtungen sind z.B. Low-E-Beschichtungen (Beschichtungen mit geringer Emissivität, Low-E = low emissivity) oder TCO-Beschichtungen (Beschichtungen mit transparenten leitfähigen Oxiden, TCO = transparent conductive oxides).

Die Abmessung der Glasscheibe kann prinzipiell in weiten Bereichen variieren, in der Praxis zweckmäßig sind z.B. Glasscheiben mit einem Flächeninhalt im Bereich von 50 cm$^2$ bis 25 m$^2$, z.B. von 10x10cm$^2$ bis 6x3,2m$^2$.

Die zu untersuchende Glasscheibe ist insbesondere eine plane Glasscheibe. Es handelt sich insbesondere um Flachglas. Die Glasscheiben können wie üblich aus anorganischem Glas, insbesondere silikatischem Glas, sein. Beispiele sind Natron-Kalkglas, Borosilikatglas, Aluminosilikatglas oder Quarzglas.

Die Glasscheiben können z.B. für Anwendungen im Bauwesen für Fenster- oder Architekturglas, in der Medizin, für Automobilverglasungen, Spiegel, Solarglas oder Displayglas für Bildschirme von Computern, Fernsehern und Smartphones geeignet sein. Für die meisten dieser Anwendungen wird das hergestellte Glas weiteren Veredelungsschritten unterzogen, um es den jeweiligen Einsatzbedingungen anzupassen.

Die Glasscheibe kann bei der IR-Messung im Bereich von etwa 3000 cm$^{-1}$ ein Hintergrundsignal erzeugen, was bei der Detektion zu berücksichtigen ist. Bei Glas treten sogenannte "Low intensity bands" zwischen etwa 2800 und 3000 cm$^{-1}$ auf. Aufgrund der geringen Intensität des Hintergrundsignals in diesem Bereich ist auch dort eine Detektion von Partikeln möglich. Deren Signal ist in diesem Fall mit dem schwachen Hintergrundsignal überlagert. Im Bereich 1500 cm$^{-1}$ bis 650 cm$^{-1}$ ist das Hintergrundsignal von Glas vergleichsweise hoch, wodurch eine Messung in diesem Bereich erschwert wird. Sofern die Untersuchung eines beschichteten Glases erfolgen soll, ist das von der Beschichtung erzeugte Hintergrundsignal ebenfalls zu berücksichtigen. Bei den gängigen in der Glasindustrie verwendeten Beschichtungen, wie beispielsweise elektrochromen Beschichtungen, transparenten leitfähigen Oxiden (TCO) und infrarotreflektierenden Beschichtungen, hat sich herausgestellt, dass im Bereich des Spektrums von 3100 cm$^{-1}$ bis 2800 cm$^{-1}$ eine zufriedenstellende Messung möglich ist.

Die zu detektierenden Komponenten sind organische Teilchen oder Partikel auf der Oberfläche der Glasscheibe, die dort als Verunreinigungen vorliegen können. IR-Messungen zeigen, dass die zu detektierenden organischen Teilchen spezifische Peaks im IR-Bereich aufweisen, insbesondere im IR-Bereich von 3100 cm$^{-1}$ bis 2700 cm$^{-1}$.

Die organischen Teilchen können z.B. einen Durchmesser von 20 μm oder mehr, bevorzugt 100 μm oder mehr, aufweisen. Die organischen Teilchen weisen im Allgemeinen einen Durchmesser im Bereich von 20 μm bis 1mm, beispielsweise 100 μm bis 500 μm, auf.

Bei den organischen Teilchen kann es sich um jegliche organischen Verbindungen handeln, die im entsprechenden Bereich des infraroten Spektrums, in dem die Messung stattfinden soll, eine Absorption zeigen. Bevorzugt werden Verbindungen detektiert, die im Bereich von 3100 cm$^{-1}$ bis 2700 cm$^{-1}$ eine IR-Aktivität zeigen.

In einer bevorzugten Ausführungsform des erfindungsgemäßen Verfahrens sind die organischen Teilchen makromolekulare Verbindungen, besonders bevorzugt Polymere, oder Lipide, bevorzugt Triglyceride (Fette, Öle) und/oder Wachse. Während des Herstellungs-, Verpackungs- und Transportprozesses von Glasscheiben können die Scheiben insbesondere mit derartigen Verunreinigungen in Berührung kommen, beispielsweise in Form von polymeren Rückständen des Verpackungsmaterials oder Schmierstoffen von Maschinen oder Transportrollen. Das erfindungsgemäße Verfahren und die erfindungsgemäße Vorrichtung stellen eine einfache Möglichkeit zur gezielten Detektion dieser Verunreinigungen dar. Im Fall von Verpackungsmaterialien kann es sich insbesondere um Polymere wie Polyethylen, Polyamid, Polypropylen und/oder Polyacrylate handeln.

Die erfindungsgemäße Vorrichtung umfasst 1) eine Fixiereinrichtung zur Fixierung der zu untersuchenden Glasscheibe. Handelsübliche Fixiervorrichtungen können verwendet werden. Die Glasscheibe wird mit der Fixiervorrichtung in der Vorrichtung fixiert. Dabei können zwei zueinander senkrechte Ränder als Referenz für die Positionierung dienen, um eine exakte und reproduzierbare Positionierung zu erhalten. Auf diese Weise kann jede Position auf dem Glas durch x,y-Koordinaten definiert werden.

Die Fixierung erfolgt vorzugsweise so, dass die zu belichtende Seite der Glasscheibe möglichst wenig verdeckt wird. Hierfür bieten sich beispielsweise als Teil der Fixiervorrichtung Hakenelemente oder Halterelemente an, bei denen die Bereiche, die die zu belichtende Seite stützen, möglichst schmal sind.

Die erfindungsgemäße Vorrichtung umfasst 2) eine Belichtungsquelle für linienförmiges Licht im infraroten Bereich des Lichtspektrums, die an einer Halteeinrichtung befestigt ist und konfiguriert ist, um eine Seite der fixierten Glasscheibe, direkt oder mittels Umlenkung mit einem Spiegelsystem, mit streifendem Lichteinfall mit einem Glanzwinkel $\theta$ zu belichten.

Die beiden Seiten der in der Fixiereinrichtung fixierten Glasscheibe können, bezogen auf ihre Position in der Vorrichtung, als belichtete oder unbelichtete Seite bezeichnet werden. Im Prinzip kann je nach Aufbau der Komponenten in der Vorrichtung die Unterseite oder die Oberseite der Glasscheibe beleuchtet werden. Bei Beleuchtung der Unterseite sind die Belichtungsquelle und die Detektionseinheit der als Unterseite bezeichneten Oberfläche der Glasscheibe zugewandt, wobei die Belichtungsquelle in der Regel von der Glasscheibe auch seitlich versetzt ist. Analog befinden sich bei Beleuchtung der Oberseite die Belichtungsquelle (seitlich versetzt) und die Detektionseinheit auf der als Oberseite bezeichneten Oberfläche der Glasscheibe. Es versteht sich, dass man die Glasscheibe nach erfolgter Untersuchung in der Vorrichtung umdrehen kann, wenn auch die andere Seite untersucht werden soll.

Die Gesamtanordnung der Vorrichtung wird bevorzugt so gewählt, dass die zu belichtende Oberfläche der Glasscheibe im Wesentlichen parallel zum Fußboden des Raumes, in dem die Vorrichtung aufgebaut ist, orientiert ist und in dessen Richtung weist. Die Detektionseinheit ist dabei zwischen der Glasscheibe und der Bodenfläche angeordnet. Dieser Aufbau ist besonders vorteilhaft um eine Beeinflussung der Messung durch Sedimentation (beispielsweise durch Staubteilchen) zu minimieren.

Die Belichtungsquelle für linienförmiges IR-Licht ist so angeordnet und konfiguriert, dass eine Seite der in der Fixiereinrichtung fixierten Glasscheibe mit einem streifenden Lichteinfall bzw. streifenden Winkel beleuchtet werden kann.

Der Vorteil des Belichtens mit streifendem Lichteinfall besteht darin, dass Reflexion nur von der zu prüfenden Seite des Glases erzeugt wird. Die andere Seite der Glasscheibe und gegebenenfalls darauf befindliche Partikel erzeugen keine Reflexion und sind daher für die Detektionseinheit nicht sichtbar. Darüber hinaus bewirkt die Beleuchtung mit einem streifenden Lichteinfall eine signifikante Lichtstreuung durch die organischen Teilchen. Die zu detektierenden organischen Teilchen haben eine wellenlängenabhängige spektrale Empfindlichkeit im IR-Bereich.

Bei Belichtung mit streifendem Lichteinfall ergibt sich eine Totalreflexion. Auf diese Weise werden störende Reflexionen von der nicht belichteten Seite der Glasscheibe vermieden. Ein streifende Lichteinfall kann durch den Glanzwinkel $\theta$ beschrieben werden. Der Glanzwinkel $\theta$ ist der Winkel zwischen dem auf die Glasscheibe einfallenden Licht und der Glasscheibe. Der Einfallswinkel $\alpha$ ist der Winkel zwischen dem auf die Glasscheibe einfallenden Strahl und dem auf der Glasscheibe errichteten Lot. Demzufolge hängt der Glanzwinkel mit dem Einfallswinkel $\alpha$ wie folgt zusammen: Glanzwinkel $\theta$ = 90° - Einfallswinkel $\alpha$.

Der eingesetzte Glanzwinkel $\theta$ für den streifenden Lichteinfall kann in breiten Bereichen variieren. Für den streifenden Lichteinfall erfolgt die Belichtung z.B. mit einem Glanzwinkel $\theta$ von weniger als 10°, bevorzugt weniger als 6°, bevorzugter weniger als 5°. Der eingesetzte Glanzwinkel $\theta$ kann z.B. im Bereich von 0,1 bis weniger als 10°, bevorzugt 0,5 bis 2°, liegen. In diesen Bereichen ist auch bei großen Scheibenabmaßen eine vollständige Beleuchtung der Scheibenoberfläche mit dem streifenförmigen Laserlicht möglich.

Darüber hinaus ist in diesem Fall eine selektive Messung der beiden Scheibenoberflächen möglich. Bei großen Glanzwinkeln erfolgt eine unerwünschte Reflektion und Streuung des eingestrahlten Lichtes an Partikeln auf der unbeleuchteten, nicht zu vermessenden Oberfläche. Bei Wahl des Glanzwinkels in den erfindungsgemäßen Bereichen überwiegt die Streuung an den Partikeln der beleuchteten Scheibenoberfläche.

Die Abmessung der Glasscheibe in Richtung zur Belichtungsquelle bzw. des einfallenden Streiflichts wird als Längsrichtung bezeichnet. Die Länge des linienförmigen Lichts ist bevorzugt so konfiguriert, dass im Wesentlichen die gesamte Breite oder die gesamte Breite der Glasscheibe entlang dieser Längsrichtung belichtet werden kann. Die gesamte Länge oder im wesentliche die gesamte Länge der Glasscheibe kann auch durch einen schrittweisen Scannvorgang einzelner Teilbereiche mittels eines Laserscanners beleuchtet werden. Dies ist vorteilhaft um bei besonders großen Scheibendimensionen eine schrittweise Messung zu ermöglichen. Erfindungsgemäß ist jedoch bevorzugt, dass im Wesentlichen die ganze oder die ganze Länge der Glasscheibe gleichzeitig belichtet wird, was durch geeignete Einstellung von Strahlbreite und Glanzwinkel $\theta$ in Abhängigkeit von der Länge der Glasscheibe bewerkstelligt werden kann, wobei im Allgemeinen gilt:

$$\sin \theta \cdot \text{Länge Glasscheibe} < \text{Strahlbreite}$$

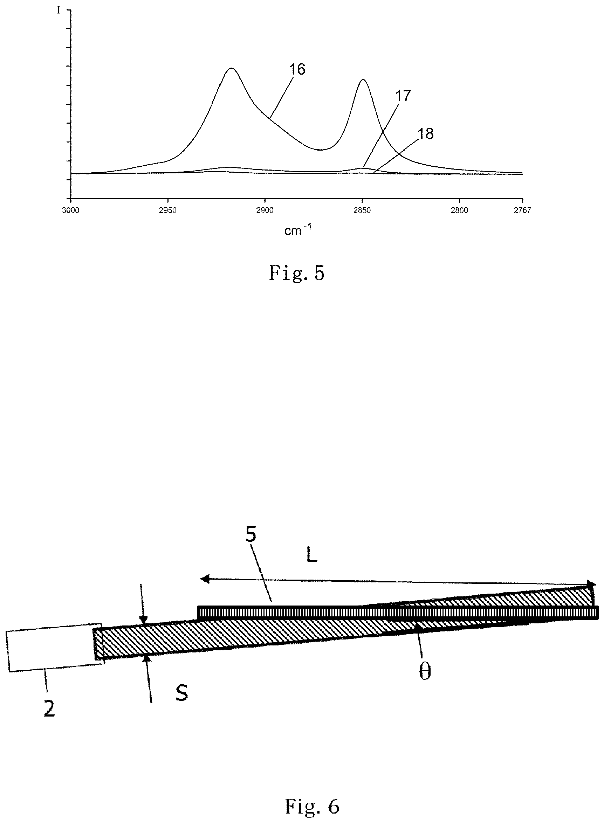

damit die ganze Scheibe beleuchtet wird (vgl. Fig. 6). Eine zeitgleiche Erfassung der gesamten Scheibenoberfläche in nur einem Schritt ermöglicht eine wesentliche Verkürzung der Messzeit und somit einen entsprechend hohen Durchsatz, wie er für die industrielle Anwendung des Verfahrens entscheidend ist.

Die Belichtungsquelle für linienförmiges IR-Licht kann z.B. einen oder mehrere Infrarot-Laser oder eine oder mehrere Wolfram-Halogen-Lichtquellen aufweisen. Die Wolfram-Halogen-Lichtquelle kann einen weiten Bereich von Lichtwellenlängen innerhalb des Infrarotspektrums emittieren. Laser-Belichtungsquellen sind bevorzugt, insbesondere wegen ihrer besseren Fokussierbarkeit.

Die Belichtungsquelle emittiert bevorzugt Licht in den als nahes Infrarot bzw. mittleres Infrarot bezeichneten Bereichen des Lichtspektrums. Als nahes Infrarot (auch NIR genannt für near infrared radiation) wird kurzwellige IR-Strahlung bezeichnet, die sich direkt an den roten Bereich des sichtbaren Lichtspektrums anschließt, und eine Wellenlänge von ungefähr 780 nm bis 3000 nm aufweist. Mittleres Infrarot (mid wavelength infrared radiation, MWIR) weist hingegen Wellenlängen von ungefähr 3,0 $\mu$m bis 8 $\mu$m auf.

Die Belichtungsquelle, insbesondere die Laser-Belichtungsquelle, kann in dem gewählten IR-Bereich eine breitbandige Beleuchtung, eine Vielzahl von diskreten Wellenlängen oder eine durchstimmbare diskrete Wellenlänge emittieren. Das emittierte IR-Licht kann somit monochromatisches, multispektrales oder hyperspektrales Licht sein.

Eine monochromatische Lichtquelle emittiert elektromagnetische Strahlung einer definierten Wellenlänge, während als multispektrale Lichtquelle eine Lichtquelle bezeichnet wird, die in der Lage ist verschiedene definierte Wellenlängen zu erzeugen. Als hyperspektral werden in der Regel multispektrale Lichtquellen bezeichnet, die eine hohe Anzahl diskret ansteuerbarer Wellenlängen besitzen. Welche Art der Lichtquelle eingesetzt wird hängt von den zu untersuchenden organischen Teilchen sowie den Hintergrundbanden der zu untersuchenden Probe selbst ab. Bevorzugt wird eine durchstimmbare monochromatische Lichtquelle eingesetzt, da dieser Aufbau auf einfache und kostengünstige Art und Weise realisierbar ist. Anhand einiger Referenzmessungen ist für den Fachmann ersichtlich ob mit diesem Versuchsaufbau eine hinreichende Bestimmung der zu identifizierenden organischen Teilchen möglich ist. Gegebenenfalls modifiziert der Fachmann daraufhin die Lichtquelle hin zu einer multispektralen oder hyperspektralen Quelle um eine Messung bei verschiedenen Wellenlängen zu ermöglichen.

Dem Fachmann sind die verschiedensten Möglichkeiten zur Erzeugung monochromatischen Lichtes bekannt. Dabei kommen beispielsweise Lichtquellen zum Einsatz, die bereits monochromatisches Licht ausstrahlen. Zu diesen zählen Laser und Gasentladungslampen. Ferner können einer spektralbreitbandigen Lichtquelle geeignete Monochromatoren, wie Prismen, Beugungsgitter oder optische Filter, bevorzugt Beugungsgitter, nachgeschaltet werden.

Geeignete Laser für die Laser-Belichtungsquelle sind z.B. Optical Parametric Oscillator (OPO)-Laser, z.B. Msquared Firefly IR SW oder Coherent Chameleon MPX-Compact OPO.

Mit der Belichtungsquelle kann linienförmiges IR-Licht emittiert werden. Dies kann z.B. durch Kombination eines punktförmig emittierenden Lasers mit einem Beugungsgitter erhalten werden, wodurch aus dem punktförmigen Laserstrahl ein linienförmiger Laserstrahl gebildet wird.

Die Belichtungsquelle für linienförmiges IR-Licht emittiert IR-Licht, z.B. IR-Licht mit einer Wellenzahl im Bereich von 1000 cm$^{-1}$ bis 4000 cm$^{-1}$, bevorzugt im Bereich von 3100 cm$^{-1}$ bis 2700 cm$^{-1}$. Entsprechende Wellenzahlenbereiche gelten auch für die Detektionseinheit, d.h. in der Detektionseinheit wird vorzugsweise in diesen Wellenzahlenbereichen detektiert. Die Wellenzahl ist eine in der Spektroskopie gebräuchliche Größe und beschreibt den Kehrwert der Wellenlänge.

Mit dem IR-Licht der Belichtungsquelle kann die Seite der Glasscheibe direkt mit streifendem Lichteinfall beleuchtet werden oder der IR-Lichtstrahl kann mithilfe eine Spiegelsystems, das in dem Gehäuse enthalten ist, zur Belichtung der Seite der Glasscheibe umgelenkt werden und nach der Umlenkung die Seite der Glasscheibe mit streifendem Lichteinfall beleuchten. Das Spiegelsystem kann aus einem oder mehreren Spiegeln gebildet sein, wobei konkave Spiegel bevorzugt sind. Der Spiegel ist bevorzugt ein zylindrischer Spiegel, insbesondere ein konkaver zylindrischer Spiegel. Die Belichtung mit einem solchen Spiegelsystem ist bevorzugt, da dadurch eine verbesserte Homogenisierung bzw. Parallelisierung des Licht ermöglicht werden kann. Dies ist vorteilhaft um die gesamte zu beleuchtende Scheibenoberfläche mit einem Lichtstrahl gleicher Intensität zu erfassen.

Es ist bevorzugt, dass die Seite der fixierten Glasscheibe durch den streifenden Lichteinfall in wesentlichen ganzflächig oder ganzflächig belichtet wird. Im wesentlichen ganzflächig bedeutet hierbei insbesondere, dass mindestens 80%, bevorzugt mindestens 90% der Fläche der Oberfläche der Glasscheibe beleuchtet werden. Die Beleuchtung der Oberfläche sollte über die Fläche möglichst homogen sein. Insbesondere ist eine gleichzeitige im wesentlichen ganzflächige oder ganzflächige Belichtung bevorzugt. Dies hat den Vorteil, dass die gesamte belichtete Oberfläche der Scheibe in einer Messung erfasst werden kann.

Bei der Belichtung der Glasscheibe sollte darauf geachtet werden, dass keine Belichtung durch die seitlichen Kanten der Glasscheiben erfolgt, um störende Reflexion bzw. Streulicht innerhalb der Scheibe zu vermeiden.

Die erfindungsgemäße Vorrichtung umfasst 3) eine Detektionseinheit, die so angeordnet ist, dass sie der zu belichtenden Seite der Glasscheibe zugewandt ist, und konfiguriert ist, um IR-Licht zu detektieren, das von organischen Teilchen auf der belichteten Seite der Glasscheibe gestreut wird, um Daten für eine Abbildung und/oder ein Spektrum zu erhalten.

Die Detektionseinheit ist gewöhnlich an einer Halteeinrichtung befestigt. Um den Abstand zwischen der Detektionseinheit und der fixierten Glasscheibe einzustellen, kann die Detektionseinheit z.B. an einer Halteeinrichtung, z. B. einem Stativ, angebracht sein, die eine Bewegung in x,y,z-Richtung ermöglicht. Dies ist vorteilhaft um die zu untersuchende Glasscheibe so zu positionieren, dass die gesamte Scheibenoberfläche gleichzeitig von der Lichtquelle erfasst wird. In einer alternativen Ausführungsform kann die bewegbare Halteeinrichtung für die Detektionseinheit auch bei Verwendung eines Abscannmodus dazu dienen, die Position der Detektionseinheit synchron mit der abscannenden Belichtung zu bewegen, um eine verbesserte Detektion zu gewährleisten.

Die Detektionseinheit befindet sich vorzugweise in einem Winkel von 90° bzw. etwa 90° zur fixierten Glasscheibe. Eine leichte Neigung, z.B. 90°±5°, ist zwar denkbar, aber in der Praxis weniger sinnvoll, da diese in den erhaltenen Messdaten über eine Koordinatentransformation korrigiert werden sollte.

Die Detektionseinheit dient dazu, das von den organischen Partikeln auf der Oberfläche der Glasscheibe gestreute Licht und damit die Partikel zu detektieren. Die Detektionseinheit kann eine Anordnung von Detektorelementen enthalten. Verschiedene Arten von Detektorelementen können verwendet werden, z.B. Indium-Arsenid- oder Quecksilber-Cadmium-Tellurid (MCT)- oder Indium-Antimon-Detektorelemente.

Die Detektionseinheit kann eine optische Kamera oder optische IR-Kamera, wenn keine selektive Detektion der organischen Teilchen erforderlich ist, oder eine multispektrale Kamera oder eine hyperspektrale Kamera sein. Bei Einsatz einer optischen Kamera bzw. optischen IR-Kamera können Daten für eine Abbildung der Seitenoberfläche erhalten werden. Bei Einsatz der Multispektral- oder Hyperspektralkamera können Daten für ein Spektrum für die Seite der Glasscheibe erhalten werden. Die Detektionseinheit ist in der Regel mit einer Vielzahl von Einzeldetektoren versehen.

Es versteht sich, dass die eingesetzte Kamera für den verwendeten IR-Bereich empfindlich sein muss. Die geeigneten Wellenlängenbereiche wurde vorstehend bezüglich der Belichtungsquelle genannt.

Beispiele für optische IR-Kameras sind dem Fachmann hinlänglich bekannt. Dazu gehören unter anderem Infratec Image IR8300, IR-Kameras IRC912 sowie FLIR A6650.

Sensoren für multispektrale und hyperspektrale Kameras sind z.B. übliche CCD-Sensoren (CCD = charge-coupled device; ladungsgekoppeltes Bauteil) oder CMOS-Sensoren (CMOS = complementary metal-oxide-semiconductor; komplementärer Metall-Oxid-Halbleiter). CMOS-Sensoren werden auch als aktive Pixelsensoren bezeichnet. Die multispektralen und hyperspektralen Kameras umfassen ferner für den Durchlauf im gewählten Frequenzbereich ein abstimmbares Spektralfilter oder Beugungsgitter. Als abstimmbare Spektralfilter eignen sich z.B. Interferenzfilter, insbesondere Bandpassfilter.

Die Detektionseinheit weist in der Regel auch eine Verarbeitungseinheit auf, in der die Signale des oder der Sensoren in elektronische Daten der Abbildung und/oder des Spektrums überführt werden.

Die erfindungsgemäße Vorrichtung umfasst ferner ein Gehäuse, in dem sich die Fixiereinrichtung, die Infrarot-Belichtungsquelle und die Detektionseinheit befinden, wobei das Gehäuse mindestens eine verschließbare Öffnung aufweist und das Innere des Gehäuses im geschlossenen Zustand von externen Lichtquellen abgeschirmt ist. Es versteht sich, dass die Halteeinrichtung für die Belichtungsquelle für linienförmiges IR-Licht und, falls vorhanden, die Halteeinrichtung für die Detektionseinheit sich ebenfalls in dem Gehäuse befinden.

Das Gehäuse dient als lichtabsorbierende Einheit, wodurch die Fixiereinrichtung, die Infrarot-Belichtungsquelle und die Detektionseinheit abgeschottet werden. Die Abschottung innerhalb eines Gehäuses verhindert, dass externe Lichtquellen die Messung stören. Die Innenwände des Gehäuses sind bevorzugt mit einer reflexionsarmen Beschichtung versehen, um unnötige Lichtreflexionen auf dem Glas zu vermeiden. Als reflexionsarme Beschichtung für die Innenwände eignet sich insbesondere ein Überzug mit schwarzer Farbe. Es ist auch bevorzugt, dass andere Teile im Inneren des Gehäuses, wie z.B. die Halteeinrichtungen oder Gehäuseteile der Belichtungsquelle und der Detektionseinheit, mit einer solchen reflexionsarmen Beschichtung versehen sind.

Das Gehäuse weist mindestens eine verschließbare Öffnung auf. Als Verschließelement kann z.B. einfach ein abnehmbarer Deckel oder eine Klappe dienen. Die Öffnung dient zur Aufnahme und Fixierung der zu untersuchenden Glasscheibe in der Fixiervorrichtung und zur Entnahme der Glasscheibe aus der Vorrichtung nach erfolgter Analyse. Die Aufnahme, Fixierung und Entnahme der Glasscheibe können manuell erfolgen. Dies kann aber gegebenenfalls mithilfe geeigneter Mittel auch automatisiert durchgeführt werden, wodurch die Geschwindigkeit der Analyse weiter erhöht werden kann.

Die Vorrichtung kann ferner eine Lichtfalle in dem Gehäuse aufweisen, die weitere Lichtreflexion vermeidet. Die Lichtfalle kann bevorzugt auf der Seite im Gehäuse angeordnet sein, die der Seite gegenüberliegt, von wo das IR-Licht auf die Seite der Glasscheibe einfällt. Die Lichtfalle ist ferner bevorzugt etwa in Höhe der fixierten Glasscheibe angebracht. In einer bevorzugten Ausführungsform weist die Vorrichtung daher ferner eine Lichtfalle auf, die seitlich von dem Seitenende der fixierten Glasscheibe angeordnet ist, das dem Seitenende der fixierten Glasscheibe gegenübersteht, von wo das IR-Licht auf die Seite der Glasscheibe streifend einfällt.

Lichtfallen sind dem Fachmann bekannt und im Handel erhältlich. Ein Beispiel für eine geeignete Lichtfalle ist eine Rayleigh-Lichtfalle.

In einer bevorzugten Ausführungsform weist die Vorrichtung ferner einen Strahlaufweiter, insbesondere einen 2D-Strahlaufweiter, auf, der das von der Belichtungsquelle für linienförmiges IR-Licht emittierte IR-Licht, bevorzugt IR-Laserlicht, in der Breite aufweitet, um die zu untersuchende Oberfläche der fixierten Glasscheibe mit aufgeweitetem bzw. flächenförmigem IR-Licht zu belichten. Der Strahlaufweiter wird in den Strahlgang des von der Belichtungsquelle emittierten IR-Lichts positioniert, um einen aufgeweiteten Lichtstrahl zu erhalten, der dann direkt oder mittels Umlenkung mit einem Spiegelsystem, insbesondere einem konkaven zylindrischen Spiegel, für die Belichtung der Glasscheibe mit streifendem Lichteinfall eingesetzt wird.

Strahlaufweiter oder optische Strahlaufweiter werden auch als Beam Expander bezeichnet. Als Strahlaufweiter können Teleskop-Optiken verwendet werden, z.B. ein Keppler-Fernrohr oder ein Galilei-Fernrohr.

Sofern linienförmiges IR-Licht, insbesondere IR-Laserlicht, für die Belichtung der Glasscheibe verwendet wird, weist das IR-Licht vorzugsweise eine Linienbreite bzw. Strahlbreite im Bereich von 50 $\mu$m bis 50 mm, bevorzugt von 1 bis 5 mm, auf. Sofern durch einen Strahlaufweiter aufgeweitetes bzw. flächenförmiges IR-Licht, insbesondere IR-Laserlicht, für die Belichtung der Glasscheibe verwendet wird, weist das IR-Licht vorzugsweise eine Linienbreite bzw. Strahlbreite im Bereich von 0,5 cm bis 5 cm, bevorzugt 0,8 cm bis 2,5 cm, auf. Dies ist besonders vorteilhaft um die gesamte zu belichtende Oberfläche der Glasscheibe zu erfassen.

Die erfindungsgemäße Vorrichtung kann ferner mit mindestens einer Verarbeitungseinheit und/oder mindestens einer Ausgabeeinheit und/oder mindestens einer Speichereinheit verbunden sein, die zur Analyse der erhaltenen Daten dienen können.

Die Verarbeitungseinheit ist so konfiguriert ist, dass sie die von der Detektionseinheit übermittelten Daten für eine Abbildung und/oder ein Spektrum in elektronischer Form übernimmt, aufarbeitet und/oder analysiert. Für die Verarbeitungseinheit können z.B. übliche Mikroprozessoren eingesetzt werden. Die Ausgabeeinheit kann die Daten für eine Abbildung und/oder ein Spektrum in geeigneter Form ausgeben, z.B. in Form von Zahlenwerten oder graphischen Darstellungen. Geeignete Ausgabeeinheiten sind z.B. Bildschirme oder Druckvorrichtungen.

Die Daten für eine Abbildung können mit der Ausgabeeinheit ausgegeben werden und die erhaltenen Zahlenwerte oder Abbildungen können von einem geschulten Personal ausgewertet werden, um das Vorhandensein und/oder die Position von organischen Partikeln auf der Glasscheibe zu bestimmen. Alternativ können das Vorhandensein und/oder die Position auch in der Verarbeitungseinheit mithilfe geeigneter Software-Programme automatisch bestimmt werden.

Die Speichereinheit kann zur Speicherung der Daten für eine Abbildung und/oder ein Spektrum dienen. In der Speichereinheit kann auch einer Sammlung vorgegebener Spektren enthalten sein. Die vorgegebenen Spektren werden durch das erfindungsgemäße Verfahren erhalten, bei dem Referenzscheiben verwendet werden, auf denen sich organische Teilchen von bekannter Art befinden. Durch den Vergleich eines Spektrums, das von einer Glasscheibe mit nicht bekannten organischen Partikeln erhalten wird, mit den vorgegebenen Spektren (Referenzspektren) kann eine schnelle Identifizierung der Art der unbekannten organischen Partikel erfolgen. Der Vergleich kann visuell durch geschultes Personal erfolgen. Das zu untersuchende Spektrum und die Sammlung vorgegebener Spektren kann dabei auf einem Bildschirm und/oder in Papierform vorliegen. Mit geeigneten Software-Programmen kann der Vergleich der Spektren auch automatisch in der Verarbeitungseinheit durchgeführt werden. Programme, die einen Vergleich von Spektren ausführen können, sind bekannt.

Sofern Glasscheiben mit einer Beschichtung untersucht werden sollen kann es sinnvoll sein auch entsprechende Referenzscheiben zu erstellen, die diese Beschichtung und zu detektierende organische Partikel bekannter Art umfassen. Auf diese Weise können die von der Beschichtung erzeugten Banden auf einfache Art und Weise aus den Spektren der untersuchten Scheiben herausgerechnet werden. Inwiefern dies erforderlich ist hängt von der Art der Beschichtung und der Intensität der beschichtungseigenen Banden ab.

Wie bereits ausgeführt, zeigen verschiedene Arten von organischen Partikeln wellenlängenabhängige Streucharakteristiken, so dass Spektren erhalten werden, die für die jeweilige Art der organischen Partikel charakteristisch sind. Die Intensität der erhaltenen Spektren hängt in der Regel auch von der Größe der vorhandenen organischen Partikel ab, so dass hierüber auch Informationen zur Größe der Partikel gegeben sind.

Die Speichereinheit kann z.B. einen flüchtigen und/oder nichtflüchtigen Speicher enthalten. Der Speicher kann z.B. eine Festplatte, ein Random-Access Memory (RAM), einen Cache-Speicher, einen Flash-Speicher oder eine optische Platte sein.

In einer bevorzugten Ausführungsform ist die Halteeinrichtung für die Belichtungsquelle für linienförmiges IR-Licht bewegbar konfiguriert, so dass die Seite der fixierten Glasscheibe mit IR-Licht, vorzugsweise mit linienförmigem IR-Licht, mit streifendem Lichteinfall mit dem Glanzwinkel θ durch entsprechende Bewegung von der Halteeinrichtung abgetastet wird. Alternativ oder zusätzlich kann die Halteeinrichtung für die Belichtungsquelle so konfiguriert sein, dass die Glasscheibe bewegbar ist, um eine Abtastung der Seite der fixierten Glasscheibe mit IR-Licht, vorzugsweise mit linienförmigem IR-Licht, mit streifendem Lichteinfall mit dem Glanzwinkel θ zu ermöglichen.

In einer alternativen Ausführungsform, in der die Glasoberfläche schrittweise durch eine Scanvorrichtung erfasst wird, ist es bevorzugt, dass das Abscannen mithilfe einer bewegbaren Halteeinrichtung für die Belichtungsquelle für linienförmiges IR-Licht erfolgt. Auf diese Weise kann eine homogene Beleuchtung der vom Scanner erfassten Bereiche der Glasscheibenseite erreicht werden.

In einer weiteren bevorzugten Ausführungsform umfasst die Vorrichtung einen Strahlaufweiter, der das von der Belichtungsquelle für linienförmiges IR-Licht emittierte IR-Licht in der Breite aufweitet, um die Seite der fixierten Glasscheibe mit aufgeweitetem bzw. flächenförmigem IR-Licht zu belichten.

In einer weiteren bevorzugten Ausführungsform umfasst die Vorrichtung einen zylindrischen Spiegel, der konfiguriert ist, um das von der Belichtungsquelle für linienförmiges IR-Licht emittierte und gegebenenfalls durch einen Strahlaufweiter aufgeweitete IR-Licht aufzufangen und zur Belichtung der Seite der fixierten Glasscheibe mit streifendem Lichteinfall mit einem Glanzwinkel θ umzulenken.

In einer besonders bevorzugten Ausführungsform umfasst die Vorrichtung einen Strahlaufweiter und ein Spiegelsystem, bevorzugt einen zylindrischen Spiegel, insbesondere einen konkaven zylindrischen Spiegel, wobei der Strahlaufweiter das von der Belichtungsquelle für linienförmiges IR-Licht emittierte IR-Licht in der Breite aufweitet, und das so erhaltene aufgeweitete bzw. flächenförmige IR-Licht mithilfe des zylindrischen Spiegels umgelenkt wird, um die Seite der fixierten Glasscheibe mit flächenförmigem IR-Licht in streichendem Lichteinfall mit dem Glanzwinkel θ zu belichten. Auf diese Weise kann eine besonders homogene Beleuchtung der ganzen Glasscheibenseite erreicht werden, wodurch die Datenqualität verbessert wird.

Die vorliegende Erfindung betrifft ferner ein Verfahren zur Detektion von organischen Teilchen auf einer unbeschichteten oder beschichteten Glasscheibe mittels Streulicht, wobei eine vorstehend beschriebene erfindungsgemäße Vorrichtung eingesetzt wird, wobei das Verfahren folgende Schritte umfasst:

1) Fixieren einer beschichteten oder unbeschichteten Glasscheibe in der Fixiereinrichtung;
2) Belichten einer Seite der fixierten Glasscheibe mit streifendem Lichteinfall mit einem Glanzwinkel $\theta \leq 12°$ mithilfe der Belichtungsquelle für linienförmiges IR-Licht;
3) Erhalten von Daten für eine Abbildung und/oder ein Spektrum von der belichteten Seite der Glasscheibe mit der Detektionseinheit, und
4) Analysieren der Daten für eine Abbildung und/oder ein Spektrum, wobei die Anwesenheit und die Position der organischen Teilchen auf der Seite der Glasscheibe anhand der aufgenommenen Abbildung bestimmbar sind und die Art der organischen Teilchen durch Vergleich des erhaltenen Spektrums mit einer Sammlung vorgegebenen Spektren bestimmbar ist, wobei für die Aufnahme der vorgegebenen Spektren Glasscheiben verwendet werden, auf denen sich organische Teilchen von bekannter Art befinden.

Einzelheiten zu den Schritten des erfindungsgemäßen Verfahren sind vorstehend beschrieben. Folgende alternative Ausführungsformen sind für das erfindungsgemäße Verfahren besonders bevorzugt, wobei in allen Fällen der Einsatz von Laserlicht bevorzugt ist:

a) Die Belichtungsquelle für linienförmiges IR-Licht emittiert monochromatisches Licht. In diesem Fall wird in der Regel eine optische Kamera bzw. optische IR-Kamera als Detektionseinheit verwendet und es werden Daten für eine Abbildung erhalten, die zur Bestimmung des Vorhandenseins und/oder der Lage von organischen Teilchen dienen können. Als Belichtungsquelle kann dabei je nach zu vermessender Probenzusammensetzung auch eine multispektrale oder hyperspektrale Quelle eingesetzt werden. Mit diesem Aufbau kann eine gute Optik und eine verbesserte Fokussierung erreicht werden.

b) Die Belichtungsquelle für linienförmiges IR-Licht emittiert ein breitbandiges Lichtspektrum und vor der Detektionseinheit ist ein Monochromator vorgeschaltet wird, um eine bestimmte Wellenlänge zu detektieren. Der verwendete Monochromator ist dabei einstellbar, so dass die Wellenlänge des erzeugten monochromatischen Lichtes wählbar ist. Ein derartiger Aufbau ist einfacher und kostengünstiger realisierbar als der Aufbau gemäß Alternative a), wobei die gute Fokussierbarkeit des Aufbaus gemäß a) nicht erreicht wird.

c) Die Belichtungsquelle für linienförmiges IR-Licht emittiert ein breitbandiges Lichtspektrum und die Detektionseinheit ist eine multispektrale Kamera oder eine hyperspektrale Kamera. Erfindungsgemäß werden diese Arten von Kameras beispielsweise im Schnappschussmodus (Detektor-Output besteht aus Gesamtdatensatz) oder spektralen Scanmodus (Detektor-Output besteht aus verschiedenen monochromatischen Datensätzen) betrieben. Auf diese Art und Weise ist eine schnelle Erfassung der Probenoberfläche möglich, die eine hohe Prozessgeschwindigkeit ermöglicht.

Die Erfindung wird nachfolgend anhand von nicht einschränkenden Ausführungsbeispielen unter Bezug auf die beigefügten Zeichnungen näher erläutert.

In diesen zeigen:

Fig. 1	schematisch eine Seitenansicht einer Ausführungsform einer erfindungsgemäßen Vorrichtung;

Fig. 2	schematisch eine Seitenansicht einer weiteren Ausführungsform einer erfindungsgemäßen Vorrichtung;

Fig. 3	schematisch eine Ansicht in Draufsicht auf die zu untersuchende Glasscheibe in einer erfindungsgemäßen Vorrichtung gemäß Fig. 2;

Fig. 4	zwei Spektren, die mit einer erfindungsgemäßen Vorrichtung für eine Glasscheibe erhalten wurden, auf der sich Polymerteilchen einer ersten Polymerart befanden;

Fig. 5	zwei Spektren, die mit einer erfindungsgemäßen Vorrichtung für eine Glasscheibe erhalten wurden, auf der sich Polymerteilchen einer zweiten Polymerart befanden;

Fig. 6	die Abhängigkeit der belichteten Fläche auf der Glasscheibe von dem Glanzwinkel $\theta$, der Strahlbreite des einfallenden Lichts und der Länge der Glasscheibe.

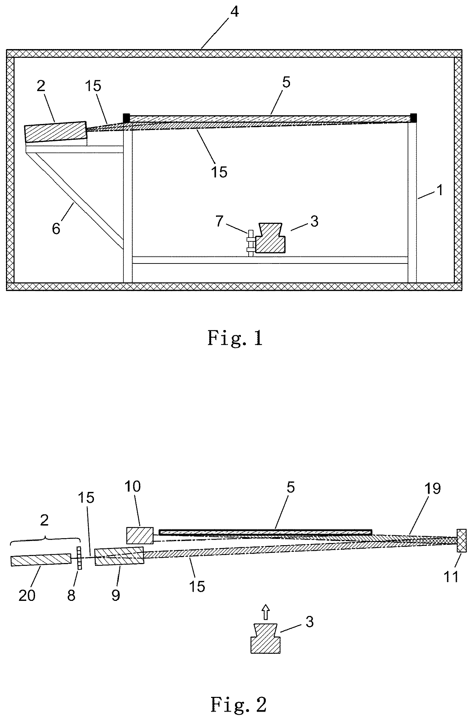

Fig. 1 zeigt schematisch eine Seitenansicht einer Ausführungsform einer erfindungsgemäßen Vorrichtung, die ein Gehäuse 4 in geschlossenen Zustand aufweist, in dem sich folgende Komponenten befinden: eine Fixiereinrichtung 1 zur Fixierung der zu untersuchenden Glasscheibe 5, die fixierte Glasscheibe 5, eine Lasereinrichtung als Belichtungsquelle für linienförmiges IR-Licht 2, die an einer Halteeinrichtung 6 befestigt ist, sowie eine Detektionseinheit 3, z.B. eine optische IR-Kamera, die an einer Halteeinrichtung 7 befestigt ist. Die Belichtungsquelle für linienförmiges IR-Licht 2 ist so angeordnet und konfiguriert, dass das Licht/Laserlicht 15 eine Oberfläche der Glasscheibe direkt mit streifendem Lichteinfall mit einem Glanzwinkel $\theta$ belichten kann. Das verwendete linienförmige Laserlicht kann z.B. eine Linienbreite von 1-2 mm aufweisen oder mithilfe eines Strahlaufweiters (hier nicht gezeigt) aufgeweitet sein, z.B. auf eine Strahlbreite von 0,8 cm bis 2,5 cm. Bei der gezeigten Variante sind die Parameter so eingestellt, dass die gesamte Länge der Glasscheibe gleichzeitig belichtet wird. Bei einer Scheibenlänge von 90 cm (gemessen entlang der Scheibenkante in Richtung des einfallenden Streiflichtes) und einer Scheibenbreite von 60 cm wird bei einer Strahlbreite von 2 cm beispielsweise ein Glanzwinkel von $\theta=1,3°$ gewählt um die Scheibe in ihrer Gesamtheit zu belichten. In einer alternativen Ausführungsform kann die Halteeinrichtung 6 für die Belichtungsquelle so konfiguriert sein, dass sie in waagerechter Richtung bewegbar ist, um die Seite der Glasscheibe im Wesentlichen ganzflächig abzutasten.

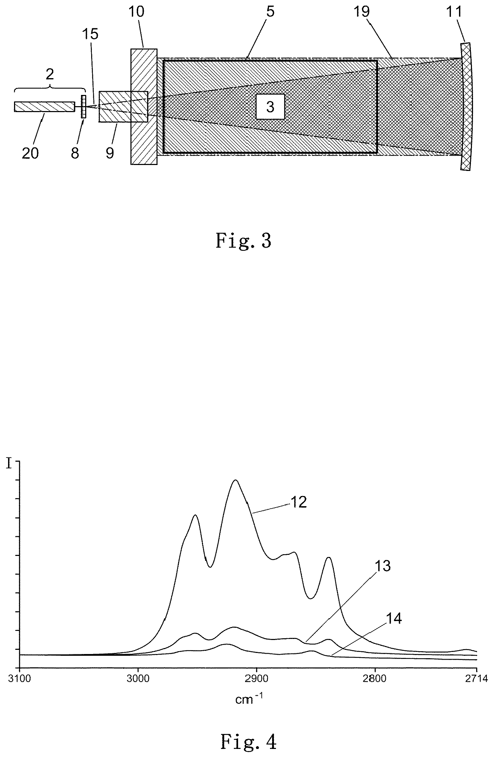

Die Fig. 2 und 3 zeigen schematisch eine Seitenansicht und eine Draufsicht einer weiteren besonders bevorzugten Ausführungsform einer erfindungsgemäßen Vorrichtung, wobei das Gehäuse und Fixier- und Halteeinrichtungen aus Gründen der Übersichtlichkeit nicht gezeigt sind.

Diese Vorrichtung weist als Belichtungsquelle für linienförmiges IR-Licht 2 einen Laser 20 mit vorgesetztem Beugungsgitter 8 auf. Die Vorrichtung weist ferner einen 2D-Strahlaufweiter 9 auf, der in dem von der Belichtungsquelle emittierten linienförmigen IR-Lichtstrahl (z.B. mit einer Linienbreite von 1-2 mm) positioniert ist, um den Lichtstrahl aufzuweiten. Der erhaltene aufgeweitete Laserstrahl 15 weist z.B. eine Linienbreite von ca. 1 cm auf. In der Vorrichtung ist zusätzlich ein konkaver zylindrischer Spiegel 11 angeordnet. Der aufgeweitete IR-Lasterstrahl fällt auf den Spiegel 11, der den Laserstrahl so umlenkt, dass der umgelenkte Laserstrahl 19 mit streichendem Lichteinfall mit einem Glanzwinkel $\theta=1,3°$ die Unterseite der in der Vorrichtung fixierten Glasscheibe 5 belichtet. Diese Anordnung ermöglicht eine im wesentlichen ganzflächige und sehr homogene Beleuchtung der Oberfläche der Glasscheibe. Im Wesentlichen senkrecht zur belichteten Oberfläche der Glasscheibe ist eine Detektionseinheit 3, z.B. eine Multispektralkamera oder eine Hyperspektralkamera, angeordnet, mit der die Streulichtsignale detektiert bzw. die Daten für eine Abbildung oder ein Spektrum erhalten werden.

In der Vorrichtung ist des Weiteren eine optionale Lichtfalle 10 angeordnet, um störende Reflexionen weitgehend zu unterdrücken. Dadurch verbessert sich die Datenqualität. Die Lichtquelle ist seitlich von dem Seitenende der fixierten Glasscheibe 5 positioniert, das dem Seitenende der fixierten Glasscheibe 5 gegenübersteht, von wo das IR-Licht auf die Seite der Glasscheibe einfällt. Vorzugsweise befindet sich die Lichtfalle etwa in gleicher Höhe wie die Glasscheibe.

Fig. 6 zeigt die geometrischen Verhältnisse bei der Belichtung und die Abhängigkeit der belichteten Fläche auf der Glasscheibe von dem Glanzwinkel $\theta$, der Strahlbreite S des einfallenden Lichts und der Länge L der Glasscheibe. Der für die Messung einzuhaltende Glanzwinkel $\theta$ lässt sich demnach durch geometrischen Gesetzmäßigkeiten aus der Strahlbreite S und der Länge L berechnen.

**Beispiele mit organischen Teilchen aus Verpackungsmaterial und IR-Spektren der damit verunreinigten Glasscheiben**

Die zu detektierenden charakteristischen Peaks organischer Teilchen auf einer Glasscheibe können durch eine vorangehende IR-Analyse bekannter organischer Verbindungen mit dem erfindungsgemäßen Verfahren identifiziert werden. Um die Einzelspektren zu bestimmen bzw. den geeigneten Wellenlängenbereich auszuwählen, wurde das gesamte Spektrum an der Glasoberfläche mit einem FTIR-Spektrometer im ATR-Mode bestimmt (Perkin-Elmer Frontier MIR). Beispiele für erhaltene Spektren sind in Fig. 4 und 5 abgebildet.

Es wurde eine Studie durchgeführt, um die charakteristischen Banden zu identifizieren, die durch fünf Arten von organischen Teilchen auf Glasscheiben erzeugt werden. Die organischen Teilchen stammen aus Verpackungsmaterial. Die Analyse zeigt, dass die organischen Verbindungen charakteristische Banden im IR-Bereich von $3100 \text{ cm}^{-1}$ bis $2700 \text{ cm}^{-1}$ aufweisen, so dass die Detektion dieser Peaks durch das erfindungsgemäße Verfahren die Anwesenheit der Materialien auf der Oberfläche der Glasscheibe bestätigen kann.

Im Einzelnen wurden verschiedene Verpackungsmaterialien über einer Glasscheibe geschliffen, um eine Oberflächenkontamination des Glases mit organischen Partikeln zu simulieren. Die Partikelgröße der gemahlenen Proben wurde nicht kontrolliert und kann nicht abgeschätzt werden. Eine große Inhomogenität ist in den Größen der gemahlenen Partikel zu erwarten.

Die erhaltenen, mit den Packstoffpartikeln verunreinigten Glasscheiben wurden gemäß dem erfindungsgemäßen Verfahren in einem Wellenlängenbereich zwischen $2700 \text{ cm}^{-1}$ und $3100 \text{ cm}^{-1}$ vermessen, um ein Spektrum zu erhalten. Die gemessene Intensität der Spektren steht in direktem Zusammenhang mit der Partikelgröße. Als Referenzmessung wurde die nicht verunreinigte Glasscheibe in gleicher Weise analysiert, um durch die Glasscheibe selbst erzeugte Hintergrundstrahlung zu erfassen. In den Fig. 4 und 5 gibt die y-Achse die Intensität (I) wieder und ist in relativen Einheiten skaliert.

In der Fig. 4 sind drei Spektren abgebildet, die auf diese Weise mit Packstoffpartikeln eines Polymers 1 erhalten wurden, wobei folgende Zuordnung gilt:

12   Spektrum für große Partikel (mit bloßem Auge sichtbar) vom Polymertyp 1 auf Glasscheibe
13   Spektrum für kleine Partikel (mit bloßem Auge nicht sichtbar) vom Polymertyp 1 auf Glasscheibe
14   Spektrum der nicht kontaminierten Glasscheibe (Referenzmessung)

In Fig. 4 ist ein Wellenlängenbereich von $3100 \text{ cm}^{-1}$ bis $2714 \text{ cm}^{-1}$ abgebildet. Dort zeigen sich die charakteristischen Banden für organische Partikel vom Polymertyp 1.

In der Fig. 5 sind drei Spektren abgebildet, die auf diese Weise mit Packstoffpartikeln eines Polymers 2 erhalten wurden, wobei folgende Zuordnung gilt:

16   Spektrum für große Partikel (mit bloßem Auge sichtbar) vom Polymertyp 2 auf Glasscheibe
17   Spektrum für kleine Partikel (mit bloßem Auge nicht sichtbar) vom Polymertyp 2 auf Glasscheibe
18   Spektrum der nicht kontaminierten Glasscheibe (Referenzmessung)

In Fig. 5 ist ein Wellenlängenbereich von $3000 \text{ cm}^{-1}$ bis $2767 \text{cm}^{-1}$ abgebildet. Dort zeigen sich die charakteristischen Banden für organische Partikel vom Polymertyp 2.

Es zeigt sich, dass durch das erfindungsgemäße Verfahren Spektren mit Banden/Peaks erhalten wurden, die für die jeweilige Art von organischen Teilchen auf den Glasscheiben charakteristisch sind. Durch Vergleich einer Sammlung vorgegebener Spektren von organischen Teilchen bekannter Art mit den Spektren, die von Glasscheiben mit unbekannter Verunreinigung an organischen Partikeln erhalten werden, ist es damit möglich, die Anwesenheit und die Art der organischen Partikel rasch und zuverlässig zu bestimmen. Der Vergleich zur Identifizierung kann von geschultem Personal oder durch ein hierfür geeignetes Computerprogramm erfolgen.

**Bezugszeichenliste**

1   Fixiereinrichtung zur Fixierung der unbeschichteten oder beschichteten Glasscheibe
2   Belichtungsquelle für linienförmiges IR-Licht
3   Detektionseinheit
4   Gehäuse

5       unbeschichtete oder beschichtete Glasscheibe
6       Halteeinrichtung für die Infrarot-Belichtungsquelle
7       Halteeinrichtung für die Detektionseinheit
8       Beugungsgitter
9       2D-Strahlaufweiter
10      Lichtfalle
11      zylindrischer Spiegel (konkav)
12      Spektrum für große Partikel vom Polymertyp 1
13      Spektrum für kleine Partikel vom Polymertyp 1
14      Glasmessung
15      Licht-/Laserstrahl
16      Spektrum für große Partikel vom Polymertyp 2
17      Spektrum für kleine Partikel vom Polymertyp 2
18      Glasmessung
19      umgelenkter Licht-/Laserstrahl
20      Laser
I       relative Intensität
L       Länge der Glasscheibe
S       Strahlbreite des einstrahlenden Streiflichtes

## Patentansprüche

**1.** Vorrichtung zur Detektion von organischen Teilchen auf einer unbeschichteten oder beschichteten Glasscheibe (5) mittels Streulicht, umfassend:

1) eine Fixiereinrichtung (1) zur Fixierung der zu untersuchenden Glasscheibe (5);
2) eine Belichtungsquelle für linienförmiges IR-Licht (2), die an einer Halteeinrichtung (6) befestigt ist und konfiguriert ist, um eine Seite der fixierten Glasscheibe (5), direkt oder mittels Umlenkung mit einem Spiegelsystem, mit streifendem Lichteinfall mit einem Glanzwinkel $\theta$ zu belichten;
3) eine Detektionseinheit (3), die so angeordnet ist, dass sie der zu belichtenden Oberfläche der Glasscheibe zugewandt ist, und konfiguriert ist, um IR-Licht zu detektieren, das von organischen Teilchen auf der belichteten Oberfläche der Glasscheibe gestreut wird, um Daten für eine Abbildung und/oder ein Spektrum zu erhalten; und
4) ein Gehäuse (4), in dem sich die Fixiereinrichtung (1), die Belichtungsquelle für linienförmiges IR-Licht (2) und die Detektionseinheit (3) befinden, wobei das Gehäuse (4) mindestens eine verschließbare Öffnung aufweist und das Innere des Gehäuses im geschlossenen Zustand von externen Lichtquellen abgeschirmt ist.

**2.** Vorrichtung nach Anspruch 1, wobei die Halteeinrichtung (6) für die Belichtungsquelle für linienförmiges IR-Licht (2) bewegbar ist und die Halteeinrichtung (6) konfiguriert ist, um die Oberfläche der fixierten Glasscheibe (5) mit IR-Licht mit streifendem Lichteinfall mit dem Glanzwinkel $\theta$ abzutasten, und/oder die Detektionseinheit (3) an einer Halteeinrichtung (7) angebracht ist, die gegebenenfalls bewegbar ist.

**3.** Vorrichtung nach Anspruch 1 oder 2, ferner umfassend einen Strahlaufweiter (9), der das von der Belichtungsquelle für linienförmiges IR-Licht (2) emittierte IR-Licht in der Breite aufweitet, um die Oberfläche der fixierten Glasscheibe (5) mit flächenförmigem IR-Licht zu belichten.

**4.** Vorrichtung nach irgendeinem der Ansprüche 1 bis 3, ferner umfassend einen zylindrischen Spiegel (8), der konfiguriert ist, um das von der Belichtungsquelle für linienförmiges IR-Licht (2) emittierte und gegebenenfalls mit einem Strahlaufweiter (9) aufgeweitete IR-Licht aufzufangen und zur Belichtung der Oberfläche der fixierten Glasscheibe (5) mit streifendem Lichteinfall mit einem Glanzwinkel $\theta$ umzulenken.

**5.** Vorrichtung nach irgendeinem der Ansprüche 1 bis 4, wobei das linienförmige IR-Licht eine Linienbreite im Bereich von 50 $\mu$m bis 3 mm, bevorzugt 1 bis 2 mm, aufweist oder das aufgeweitete IR-Licht eine Breite im Bereich von 0,5 cm bis 2 cm, bevorzugt 0,8 cm bis 1,2 cm, aufweist.

**6.** Vorrichtung nach irgendeinem der Ansprüche 1 bis 5, ferner umfassend eine Lichtfalle (10), die seitlich von der Seitenkante der fixierten Glasscheibe (5) angeordnet ist, die der Seitenkante der fixierten Glasscheibe (5) gegenübersteht, von der ausgehend das IR-Licht auf die Oberfläche der Glasscheibe streifend einfällt.

**7.** Vorrichtung nach irgendeinem der Ansprüche 1 bis 6, wobei die Innenwände des Gehäuses (4) mit einer reflexionsarmen Beschichtung, vorzugsweise einer schwarzen Beschichtung, versehen sind.

**8.** Vorrichtung nach irgendeinem der Ansprüche 1 bis 7, wobei die Belichtungsquelle für linienförmiges IR-Licht (2) Licht mit einer Wellenlänge im Bereich von 3100 cm$^{-1}$ bis 2700 cm$^{-1}$ emittiert, wobei das emittierte Licht monochromatisches, multispektrales oder hyperspektrales Licht ist, und/oder die Belichtungsquelle für linienförmiges IR-Licht (2) eine Laser-Belichtungsquelle ist.

**9.** Vorrichtung nach irgendeinem der Ansprüche 1 bis 8, wobei die Detektionseinheit (3) eine optische Kamera, eine optische Infrarotkamera, eine multispektrale Kamera oder eine hyperspektrale Kamera ist.

**10.** Verfahren zur Detektion von organischen Teilchen auf einer unbeschichteten oder beschichteten Glasscheibe (5) mittels Streulicht, wobei eine Vorrichtung nach irgendeinem der Ansprüche 1 bis 9 eingesetzt wird und das Verfahren folgende Schritte umfasst:

1) Fixieren einer beschichteten oder unbeschichteten Glasscheibe (5) in der Fixiereinrichtung (1);
2) Belichten einer Oberfläche der fixierten Glasscheibe (5) mit streifendem Lichteinfall mit einem Glanzwinkel $\theta \leq 12°$ mithilfe der Belichtungsquelle für linienförmiges IR-Licht (2);
3) Erhalten von Daten für eine Abbildung und/oder ein Spektrum von der belichteten Oberfläche der Glasscheibe mit der Detektionseinheit (3), und
4) Analysieren der Daten für eine Abbildung und/oder ein Spektrum, wobei die Anwesenheit und die Position der organischen Teilchen auf der Oberfläche der Glasscheibe anhand der aufgenommenen Abbildung bestimmbar sind und die Art der organischen Teilchen durch Vergleich des erhaltenen Spektrums mit einer Sammlung vorgegebener Spektren bestimmbar ist, wobei für die Aufnahme der vorgegebenen Spektren Glasscheiben verwendet werden, auf denen sich organische Teilchen von bekannter Art befinden.

**11.** Verfahren nach Anspruch 10, wobei

a) die Belichtungsquelle für linienförmiges IR-Licht (2) monochromatisches Licht emittiert,
b) die Belichtungsquelle für linienförmiges IR-Licht (2) ein breitbandiges Lichtspektrum emittiert und vor der Detektionseinheit (3) ein Monochromator vorgeschaltet wird, um eine bestimmte Wellenlänge zu detektieren, oder
c) die Belichtungsquelle für linienförmiges IR-Licht (2) ein breitbandiges Lichtspektrum emittiert und die Detektionseinheit (3) eine multispektrale Kamera oder eine hyperspektrale Kamera ist.

**12.** Verfahren nach Anspruch 10 oder 11, wobei der streifende Lichteinfall mit einem Glanzwinkel $\theta$ von weniger als 10°, bevorzugt weniger als 5°, erfolgt.

**13.** Verfahren nach irgendeinem der Ansprüche 10 bis 12, wobei die Oberfläche der fixierten Glasscheibe (5) durch den streifenden Lichteinfall im wesentlichen ganzflächig oder ganzflächig belichtet wird.

**14.** Verfahren nach irgendeinem der Ansprüche 10 bis 13, wobei die Glasscheibe (5) mit einer elektrochromen Beschichtung, einer infrarotreflektierenden Beschichtung und/oder einer Beschichtung umfassend transparente leitfähige Oxide, versehen ist.

Fig. 1

Fig. 2

Fig. 3

Fig. 4

Fig. 5

Fig. 6

**Europäisches Patentamt**
**European Patent Office**
**Office européen des brevets**

# EUROPÄISCHER RECHERCHENBERICHT

Nummer der Anmeldung

EP 18 16 3524

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 618 136 B1 (ISHIDA FUTOSHI [JP]) 9. September 2003 (2003-09-09) * Spalte 1, Zeilen 14-21 * * Spalte 2, Zeile 63 - Spalte 3, Zeile 2 * * Spalte 5, Zeilen 38-46 * * Spalte 6, Zeilen 2-10,33-42 * * Spalte 7, Zeilen 13,14,22-28 * * Abbildung 1 * ----- | 1-14 | INV. G01N21/3563 G01N15/06 G01N21/896 G01N21/94 G01N21/958 G01N21/88 |
| X | EP 0 685 731 A1 (MITSUBISHI ELECTRIC CORP [JP]) 6. Dezember 1995 (1995-12-06) * Spalte 1, Zeilen 1-7 * * Spalte 13, Zeilen 50-55 * * Spalte 14, Zeilen 23,24,38-40 * * Spalte 18, Zeilen 33-46 * * Abbildung 1 * ----- | 1-14 | |
| A | US 2012/019817 A1 (TANABE ATSUSHI [JP]) 26. Januar 2012 (2012-01-26) * Absätze [0004], [0023]; Abbildung 2 * ----- | 1-14 | |
| A | US 5 581 348 A (MIURA SEIYA [JP] ET AL) 3. Dezember 1996 (1996-12-03) * Spalte 1, Zeilen 11-21 * * Spalte 3, Zeilen 1-3,25-35,40-51; Abbildungen 1A, 1B * ----- | 1-14 | RECHERCHIERTE SACHGEBIETE (IPC) G01N |
| A | US 2006/108048 A1 (ENGELBART ROGER W [US] ET AL) 25. Mai 2006 (2006-05-25) * Absätze [0004], [0007], [0009], [0031] - [0034], [0038]; Abbildungen 1,4,6 * ----- | 1-14 | |

Der vorliegende Recherchenbericht wurde für alle Patentansprüche erstellt

| Recherchenort | Abschlußdatum der Recherche | Prüfer |
|---|---|---|
| Berlin | 28. September 2018 | Navas Montero, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 18 16 3524

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-09-2018

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 6618136 | B1 | 09-09-2003 | KEINE | | | |
| EP 0685731 | A1 | 06-12-1995 | DE | 69535169 | T2 | 23-08-2007 |
| | | | EP | 0685731 | A1 | 06-12-1995 |
| | | | JP | 3258821 | B2 | 18-02-2002 |
| | | | JP | H07325041 | A | 12-12-1995 |
| | | | US | 5715052 | A | 03-02-1998 |
| US 2012019817 | A1 | 26-01-2012 | CN | 102565091 | A | 11-07-2012 |
| | | | JP | 5530984 | B2 | 25-06-2014 |
| | | | JP | 2012047729 | A | 08-03-2012 |
| | | | US | 2012019817 | A1 | 26-01-2012 |
| US 5581348 | A | 03-12-1996 | KEINE | | | |
| US 2006108048 | A1 | 25-05-2006 | US | 2006108048 | A1 | 25-05-2006 |
| | | | US | 2008277042 | A1 | 13-11-2008 |
| | | | US | 2008278716 | A1 | 13-11-2008 |
| | | | US | 2008289742 | A1 | 27-11-2008 |

EPO FORM P0461

Für nähere Einzelheiten zu diesem Anhang : siehe Amtsblatt des Europäischen Patentamts, Nr.12/82

**EP 3 543 681 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170160208 A1
- US 6008492 A
- US 6245507 B1
- US 2011102565 A1
- US 2008144001 A1